Europäisches Patentamt

European Patent Office

Office européen des brevets

(11) Numéro de publication : **0 475 860 A1**

# (12) DEMANDE DE BREVET EUROPEEN

(21) Numéro de dépôt : **91420311.2**

(51) Int. Cl.$^5$ : **B21D 1/14**

(22) Date de dépôt : **02.09.91**

(30) Priorité : **10.09.90 FR 9011356**

(43) Date de publication de la demande :
**18.03.92 Bulletin 92/12**

(84) Etats contractants désignés :
**AT BE CH DE DK ES GB GR IT LI LU NL SE**

(71) Demandeur : **CELETTE S.A.**
**67 rue Maugiron**
**F-38200 Vienne (FR)**

(72) Inventeur : **Celette, Germain**
**1 rue Porterne**
**F-38200 Vienne (FR)**

(74) Mandataire : **Maureau, Philippe et al**
**Cabinet GERMAIN & MAUREAU BP 3011**
**F-69392 Lyon Cédex 03 (FR)**

(54) **Dispositif de montage d'une pince pour la tenue du bas de caisse d'un véhicule sur un marbre destiné à la réparation de la carrosserie de ce véhicule.**

(57)   Dispositif dans lequel chaque pince (6) est montée à l'extrémité supérieure d'un support constitué par une vis verticale (9) qui, montée dans une glissière horizontale (14) faisant saillie vers l'extérieur du marbre perpendiculairement à celui-ci, est réglable verticalement et tranversalement au marbre par des écrous engagés sur la vis et prenant appui respectivement sur les faces supérieure et inférieure de la glissière.

   Selon l'invention, la glissière est constituée par deux barreaux parallèles (15) fixés, à leur extrémité située du côté du marbre, sur une plaque, et associés à leur autre extrémité à des moyens de liaison amovibles.

EP 0 475 860 A1

FIG_2

La présente invention a pour objet un dispositif de montage d'une pince pour la tenue du bas de caisse d'un véhicule sur un marbre destiné à la réparation de la carrosserie de ce véhicule.

Afin d'effectuer les opérations de contrôle et de redressement de la carrosserie d'un véhicule accidenté, il convient de maintenir ce véhicule de façon parfaitement immobilisée par rapport à un marbre.

Pour réaliser une telle immobilisation, il est connu de fixer le véhicule dont la carrosserie est à réparer par l'intermédiaire de quatre pinces serrant les deux nervures du bas de caisse de celui-ci. Il est impératif de pouvoir réaliser le réglage de la position de chaque pince tant longitudinalement au marbre, que transversalement au marbre et dans le sens de la hauteur.

Le brevet européen 0 072 725 au nom de la Demanderesse, décrit un dispositif dans lequel chaque pince est montée sur un suppport constitué par une vis d'orientation verticale, montée dans une glissière horizontale faisant saillie vers l'extérieur du marbre perpendiculairement à celui-ci. Des écrous engagés sur la vis prenant appui sur la faces supérieure et inférieure de la glissière permettent un réglage de la position de la pince tant en hauteur que transversalement au marbre. Pour sa part, chaque glissière portant une pince est montée réglable longitudinalement sur une colonne longitudinale, avec blocage dans la position souhaitée grâce à un excentrique.

Si cette solution donne toute satisfaction d'un point de vue fonctionnel, elle nécessite, lorsqu'une pince doit être retirée, par exemple pour faciliter la mise en place d'un véhicule sur le marbre, le dévissage complet de la vis formant support pour la pince considérée, ce qui constitue une opération longue et fastidieuse. En outre, il n'est pas facile de réaliser un démontage rapide des glissières, ce qui constitue également un handicap.

La présente invention vise à remédier à ces inconvénients en fournissant un dispositif pour le montage d'une pince, permettant une mise en place et un retrait instantanés de la pince, ainsi que dans le cas d'un marbre à rainures débouchant dans sa face supérieure, une solution technique permettant un montage et un démontage immédiats des glissières-supports de pinces.

A cet effet, dans le dispositif qu'elle concerne, du type précité, la glissière est constituée par deux barreaux parallèles fixés, à leur extrémité située du côté du marbre, sur une plaque, et associés à leur autre extrémité à des moyens de liaison amovibles.

Lorsque la pince est en position d'utilisation, la glissière est fermée à ses deux extrémités. Lorsque la pince doit être retirée, il suffit de dévisser légèrement les deux écrous qui la bloquent sur la glissière, d'ouvrir la glissière à son extrémité libre, pour retirer la pince et son support à vis par coulissement au niveau de cette extrémité ouverte.

Selon une forme d'exécution de ce dispositif, les barreaux comportent, à leurs extrémités libres, deux oreilles verticales parallèles présentant deux encoches débouchant dans leurs faces en bout, tandis que les moyens de liaison amovibles comprennent une plaque, de longueur correspondant à l'écartement entre les oreilles, destinée à venir s'encastrer entre ces dernières pour former une entretoise entre les barreaux, dont la face extérieure est équipée de moyens de fixation dans les encoches des deux oreilles des barreaux.

Il est intéressant de noter que la plaque portant les moyens de liaison amovibles, constitue une entretoise qui assure un maintien en position parfaitement parallèle des deux barreaux constitutifs de la glissière, de telle sorte que ceux-ci ne risquent pas de se rapprocher ou de s'écarter sous l'action des contraintes exercées par les écrous associés à la vis, lors des opérations de réparation de la carrosserie.

Avantageusement, les moyens de fixation de la plaque formant entretoise sur les deux oreilles des barreaux sont constitués par une barre disposée longitudinalement à la plaque dont une extrémité est équipée d'une butée destinée à prendre appui sur la face extérieure d'une oreille et dont l'autre extrémité est équipée d'un organe excentrique pivotant, destiné à prendre appui sur la face extérieure de l'autre oreille.

Selon une forme préférée de réalisation, dans ce cas, la face extérieure de la plaque est équipée d'une pièce en forme douille, qui en est solidaire, et à l'intérieur de laquelle est montée coulissante axialement la barre de serrage.

Le montage de façon flottante des moyens de verrouillage par rapport à la plaque, permet un autocentrage de ceux-ci vis-à-vis des oreilles que comportent les barreaux constitutifs de la glissière.

Afin de régler le serrage malgré les différences de fabrication, la barre de serrage comporte une butée constituée par un écrou engagé sur une tige filetée axiale formant une extrémité de la barre.

Selon une autre caractéristique de l'invention, dans le cas où la pince est destinée à être montée sur un marbre dans la face supérieure duquel débouchent des rainures longitudinales de section en T renversé, la plaque fixée de façon définitive sur les deux barreaux de la glissière est solidaire d'une platine qui, destinée à venir prendre appui sur la face supérieure du marbre, comporte au niveau de la rainure, deux évidements ménagés dans ses deux bords opposés servant chacun au passage d'un élément profilé destiné à venir se verrouiller dans la rainure, dont une partie traverse un évidement de la platine, avec fixation par un coin prenant appui sur la face supérieure de la platine, de part et d'autre de l'évidement.

Cet agencement est très intéressant car permettant un montage et un démontage instantanés de chaque glissière-support d'une pince de façon instantanée, ainsi que le réglage longitudinal de la glissière par rapport au marbre. Cela est particulièrement intéressant car permettant de retirer les glissières lors de la mise en place et du retrait d'un véhicule vis-à-vis du marbre.

Avantageusement, la platine comprend, faisant saillie de sa face inférieure, deux cubes de centrage, de côté égal à la largeur d'une rainure du marbre, et destinés à être engagés dans celle-ci.

Ces deux cubes associés à la platine assurent d'une part, le centrage et le guidage longitudinal de celle-ci sur le marbre, et d'autre part, évitent à la glissière de basculer quand on la pose sur le marbre, avant qu'elle soit bridée sur celui-ci.

Afin de permettre une course maximale des pinces dans le sens transversal au marbre, c'est-à-dire un montage de chaque pince au ras du marbre, la platine comporte un évidement situé en regard de la glissière et débouchant dans son bord tourné du côté de cette dernière.

De toute façon, l'invention sera bien comprise à l'aide de la description qui suit, en référence aux dessins schématiques annexés représentant, à titre d'exemple non limitatif, une forme d'exécution de ce dispositif.

Figure 1 est une vue d'un marbre équipé de quatre pinces fixées sur lui grâce au dispositif selon l'invention ;

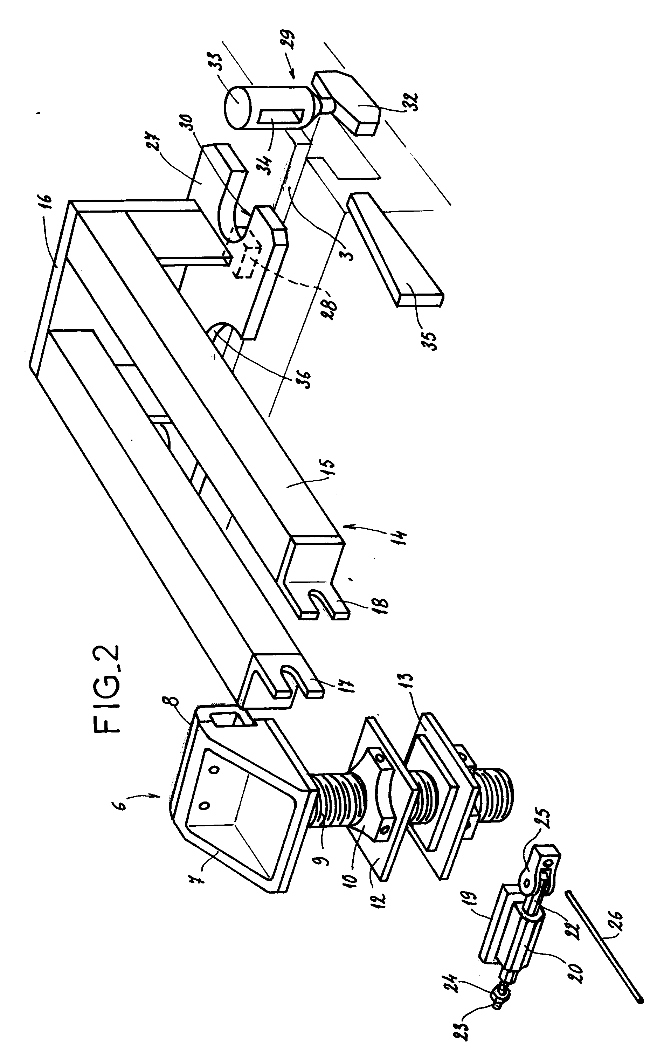

Figure 2 est une vue en perspective éclatée des principaux éléments constitutifs de ce dispositif ;

Figure 3 est une vue très schématique de dessus de ce dispositif en position de fixation d'un véhicule sur le marbre ;

Figure 4 est une vue partielle de figure 3 au cours de l'opération d'ouverture de la glissière.

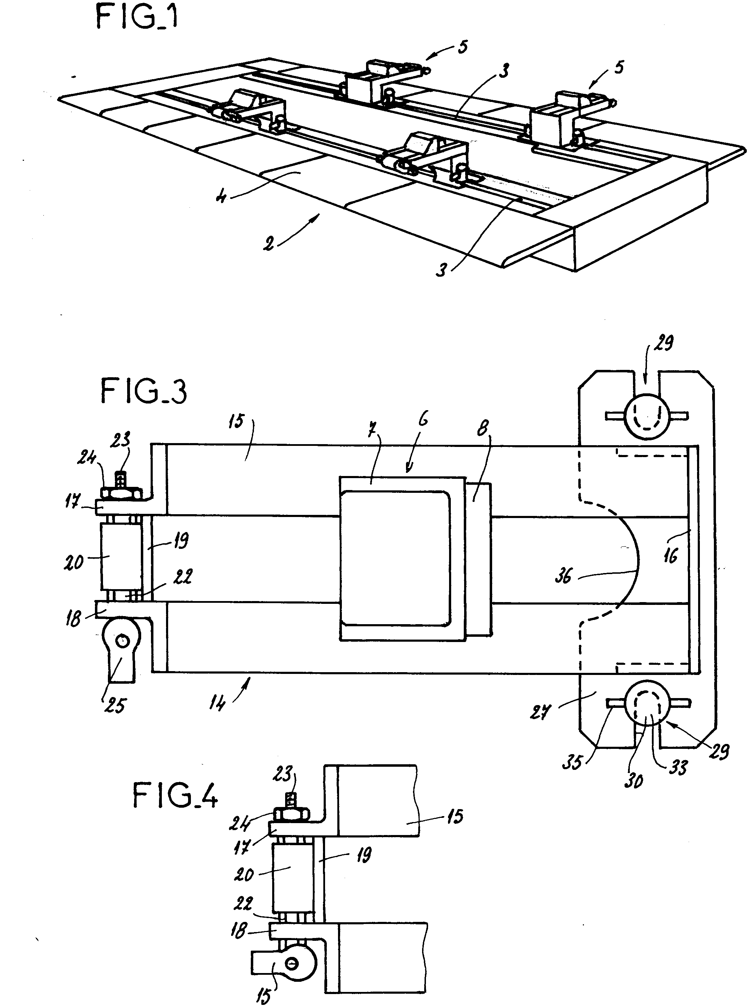

La figure 1 représente un marbre désigné par la référence générale 2, et constitué par des profilés métalliques assemblés les uns aux autres pour former un cadre de forme générale rectangulaire. La face supérieure de ce marbre est usinée, et ses deux montants longitudinaux comportent des rainures en forme de T renversé, dont chacune débouche dans sa face supérieure, et porte la référence 3. Ce marbre est équipé de plates-formes 4 qui permettent la mise en place et le retrait du véhicule, étant précisé que ces plates-formes 4 sont amovibles et peuvent être retirées lors des opérations de contrôle et de réparation.

Ce marbre est équipé de quatre dispositifs à pinces 5 destinés à se fixer au véhicule sur les nervures de bas de caisse de celui-ci.

Chaque dispositif comprend une pince de serrage 6 présentant un mors fixe 7 et un mors mobile 8, le mors fixe 7 étant monté à l'extrémité supérieure d'une vis verticale 9, à laquelle sont associés deux écrous 10, deux cales 12, et deux éléments de centrage 13. Les deux écrous 10 et les éléments qui leur sont associés sont destinés à venir prendre appui respectivement sur la face supérieure et sur la face inférieure d'une glissière 14. Cette glissière 14 est constituée par deux barreaux 15 de section rectangulaire fixés par l'une de leurs extrémités sur une plaque verticale 16. A leur autre extrémité les barreaux 15 comportent deux oreilles 17 verticales, dans le prolongement des faces en vis-à-vis des barreaux 15, présentant chacune une encoche 18 débouchant dans sa face en bout. Les oreilles 17 et encoches 18 sont destinées à réaliser le montage de moyens de liaison amovibles entre les deux barreaux 15. Ces moyens de liaison amovibles sont constitués par une plaque 19 de longueur correspondant à l'écartement entre les deux oreilles 17, destinée à venir s'encastrer entre ces dernières pour former une entretoise. Sur la face extérieure de la plaque 20 est montée une douille 20 de section polygonale, orientée dans le sens de la longueur de la plaque. Dans cette douille polygonale est montée de façon coulissante une barre 22 également polygonale, dont une extrémité se termine par une tige filetée 23 orientée axialement, sur laquelle est engagé un écrou 24. L'autre extrémité de la barre 22 est équipée d'un élément 25 en forme d'excentrique, susceptible d'être actionné en rotation par une tige 26. L'écrou 24 et l'excentrique 25 sont destinés à venir prendre appui sur les faces extérieures des deux oreilles. Le réglage de l'écrou 24 permet de tenir compte des tolérances de fabrication. En pratique, pour réaliser la fermeture de la glissière 14, il convient d'engager la plaque 19 entre les deux oreilles 17, éventuellement de régler la position de l'écrou 24, puis d'actionner l'excentrique 25 vers sa position de blocage.

Comme montré au dessin, la plaque 16 est fixée sur une platine 27 qui en est perpendiculaire, et qui est destinée à venir prendre appui sur la face supérieure du marbre. A cet effet, la platine 27 présente, faisant saillie de sa face inférieure, deux cubes 28, dont le côté est égal à la largeur d'une rainure 3 du marbre, ces deux cubes 28 assurant un positionnement longitudinal de la platine 27 vis-à-vis du marbre, et évitant un basculement de l'ensemble constitué par la platine et la glissière 14 avant que la platine soit fixée sur le marbre. La fixation sur le marbre est réalisée par l'intermédiaire de deux brides à mortaise désignées par la référence générale 29. A cet effet, la platine 27 présente deux évidements 30 débouchant dans ses deux bords transversaux opposés. Chaque bride à mortaise 29 comprend une lame profilée 32 destinée à être engagée dans une rainure 3 alors qu'elle est orientée longitudinalement à celle-ci, avant d'être pivotée de 90° par action sur sa tige 33, qui fait saillie vers le haut, et qui traverse l'évidement 30. La tige 33 présente un passage traversant 34, pour une clavette 35 en forme de coin. Après que la lame profilée 32 de la bride soit orientée perpendiculairement à la rainure, la clavette 35 est engagée dans le passage 34, et vient prendre appui sur la face supérieure de la platine 27 qu'elle immobilise sur le marbre.

La platine 27 présente également, dans son bord tourné du côté de la glissière, et en regard de cette dernière, un évidement 36. Cet évidement 36 permet d'assurer un positionnement de la vis de serrage le plus près possible du marbre, puisque la vis 9 de la pince 6 peut venir jusqu'à proximité immédiate d'un longeron du marbre, sans être gêné par la platine 27.

Comme il ressort de ce qui précède, l'invention apporte une grande amélioration à la technique existante en fournissant un dispositif de montage d'une pince sur un marbre, de conception simple, permettant une mise en place et un retrait immédiats de la pince vis-à-vis de la glissière correspondante, ainsi qu'un montage et un démontage très rapides de la glissière vis-à-vis du marbre, dans la mesure où celui-ci est équipé de rainures débouchant dans sa face supérieure.

Comme il va de soi, l'invention ne se limite pas à la seule forme d'exécution de ce dispositif décrit ci-dessus à titre d'exemple, elle en embrasse au contraire toutes les variantes de réalisation. C'est ainsi notamment que les moyens de fermeture de la glissière pourraient être différents, et constitués par des éléments à vis, une butée étant montée de façon fixe sur une tige filetée, tandis que l'autre butée est constituée par un écrou engagé sur cette tige, sans que l'on sorte pour autant du cadre de l'invention.

**Revendications**

1.- Dispositif de montage d'une pince pour la tenue du bas de caisse d'un véhicule sur un châssis destiné à la réparation de la carrosserie de ce véhicule, dans lequel chaque pince (6) est montée à l'extrémité supérieure d'un support constitué par une vis verticale (9) qui, montée dans une glissière horizontale (14) faisant saillie vers l'extérieur du marbre perpendiculairement à celui-ci, est réglable verticalement et tranversalement au marbre par des écrous engagés sur la vis et prenant appui respectivement sur les faces supérieure et inférieure de la glissière, caractérisé en ce que la glissière est constituée par deux barreaux parallèles (15) fixés, à leur extrémité située du côté du marbre, sur une plaque, et associés à leur autre extrémité à des moyens de liaison amovibles.

2.- Dispositif selon la revendication 1, caractérisé en ce que les barreaux (15) comportent, à leurs extrémités libres, deux oreilles verticales parallèles (17) présentant deux encoches (18) débouchant dans leurs faces en bout, tandis que les moyens de liaison amovibles comprennent une plaque (19), de longueur correspondant à l'écartement entre les oreilles, destinée à venir s'encastrer entre ces dernières pour former une entretoise entre les barreaux (15), dont la face extérieure est équipée de moyens de fixation dans les encoches des deux oreilles des barreaux.

3.- Dispositif selon la revendication 2, caractérisé en ce que les moyens de fixation de la plaque (19) formant entretoise sur les deux oreilles (17) des barreaux sont constitués par une barre (22) disposée longitudinalement à la plaque (19), dont une extrémité est équipée d'une butée (24) destinée à prendre appui sur la face extérieure d'une oreille (17) et dont l'autre extrémité est équipée d'un organe excentrique (25) pivotant, destiné à prendre appui sur la face extérieure de l'autre oreille (17).

4.- Dispositif selon la revendication 3, caractérisé en ce que la face extérieure de la plaque (19) est équipée d'une pièce (20) en forme douille, qui en est solidaire, et à l'intérieur de laquelle est montée coulissante axialement la barre de serrage (22).

5.- Dispositif selon l'une quelconque des revendications 3 et 4, caractérisé en ce que la barre de serrage (22) compte une butée constituée par un écrou (24) engagé sur une tige filetée (23) axiale formant une extrémité de la barre.

6.- Dispositif selon l'une quelconque des revendications 1 à 5, caractérisé en ce que dans le cas où la pince est destiné à être montée sur un marbre dans la face supérieure duquel débouchent des rainures longitudinales (3) de section en T renversé, la plaque (16) fixée de façon définitive sur les deux barreaux (15) de la glissière est solidaire d'une platine (27) qui, destinée à venir prendre appui sur la face supérieure du marbre, comporte au niveau de la rainure (3), deux évidements (30) ménagés dans ses deux bords opposés servant chacun au passage d'un élément profilé (32) destiné à venir se verrouiller dans la rainure (3), dont une partie (33) traverse un évidement (30) de la platine, avec fixation par un coin (35) prenant appui sur la face supérieure de la platine (27), de part et d'autre de l'évidement (30).

7.- Dispositif selon la revendication 6, caractérisé en ce que la platine (27) comprend, faisant saillie de sa face inférieure, deux cubes de centrage (28), de côté égal à la largeur d'une rainure (3) du marbre, et destinés à être engagés dans celle-ci.

8.- Dispositif selon l'une quelconque des revendications 6 et 7, caractérisé en ce que la platine (27) comporte un évidement (36) situé en regard de la glissière (14) et débouchant dans son bord tourné du côté de cette dernière.

FIG_1

FIG.3

FIG.4

FIG_2

EP 0 475 860 A1

**EP 0 475 860 A1**

Office européen
des brevets

**RAPPORT DE RECHERCHE EUROPEENNE**

Numero de la demande

EP   91 42 0311

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,X | EP-A-0 072 725 (CELETTE)<br>* le document en entier * | 1 | B21D1/14 |
| X | FR-A-2 591 328 (RENAULT)<br>* page 7; figure 2 * | 1 | |
| X | EP-A-0 215 512 (SAMEFA)<br>* le document en entier * | 1 | |
| A | FR-A-2 637 205 (MESSINA)<br>* figure 1 * | 6-7 | |
| A | FR-A-2 621 261 (SEFAC)<br>* figures 7,8 * | 6,7 | |
| A | DE-A-2 745 807 (CELETTE)<br>--- | | |
| A | GB-A-2 175 239 (GARDA IMPIANTI)<br><br>----- | | |

**DOMAINES TECHNIQUES RECHERCHES (Int. Cl.5 )**

B21D

Le présent rapport a été établi pour toutes les revendications

| Lieu de la recherche | Date d'achèvement de la recherche | Examinateur |
|---|---|---|
| LA HAYE | 25 OCTOBRE 1991 | PEETERS L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................
& : membre de la même famille, document correspondant

EPO FORM 1503 03.82 (P0402)